# EUROPEAN PATENT SPECIFICATION

(11) **EP 1 446 286 B1**
(45) Date of publication and mention of the grant of the patent: **31.12.2008**
(21) Application number: 01997391.6
(22) Date of filing: 22.11.2001
(51) Int. Cl.: B32B 27/12

(54) **A METHOD FOR PRODUCING ONE OR SEVERAL PRODUCTS**
VERFAHREN ZUR HERSTELLUNG EINES ODER MEHRERER PRODUKTE
PROCEDE DE PRODUCTION D'UN OU DE PLUSIEURS PRODUITS

(30) Priority: 24.11.2000 SE 0004337
(43) Date of publication of application: 18.08.2004
(73) Proprietor: CC Pack AB, 543 21 Tibro (SE)
(72) Inventor: NYBOM, Lars, Göran, S-616 90 Åby (SE); JORBE, Ingvar, S-602 34 Norrköping (SE)
(74) Representative: Bergquist, Kjell Gunnar
(86) International application number: PCT/SE2001/002582
(87) International publication number: WO 2002/042070

(56) References cited:
- WO-A1-97/19803
- DE-A1- 19 725 949
- US-A- 4 337 116

## Description

### Technical field

The present invention relates primarily to a method for producing one or several products, such as packaging products, by means of a compression moulding or die-casting procedure using at least two mould parts arranged to move towards and away from each other.

In a more specific application the present invention advocates manufacture of thin-walled products, consisting of a fibrous material, such as receptacles wherein the product, or at least one surface part thereof is covered by a layer or film, serving as a barrier and/or a foil of some other structure, such as a plastic foil.

Both these mould parts may have one or more inner, opposing cavities or, more advantageously, a lower mould part may be flat, while an upper mould part shall have a cavity, corresponding to the outer shape of the product.

For this application, when the mould parts assume a fully united position, they present a co-ordinated inner cavity, with a defining surface partially or entirely following the selected outer shape of the thin-walled product.

Thin-walled products of this type have been developed primarily for use in packing fragile goods.

As regards thin-walled products, with a fibrous frame having a surface layer or a foil, and in applications for hygienic packaging of foodstuff, the foodstuff thus packed shall rest against a moisture-resistant foil, while the fibrous frame of the packaging product shall serve as a mechanical support and protection.

Packaging products produced may naturally also be used for packing other goods and components.

Thin-walled products of the type under consideration are usually trough or plate shaped, having peripheral surface parts bent from a flat bottom part, where goods, such as foodstuff stored therein, can be covered by a plastic film surrounding the product and all or a part of the plate-shaped product, or can be covered by a lid, such as a lid made of cardboard and fitting the open portion of the product.

### Background art

A plurality of different thin-walled products, such as packaging products intended to enclose one or several items are already known, in which the material of the products may be aluminium, plastic and/or fibre material.

Since the present invention is based primarily on the production of packaging products of disposable type, and makes use of a fibrous material as starting and frame or support material, only this application will be considered in detail.

Thus, various methods are already known for producing packaging of different shapes from a fibrous material, such as wood fibre.

The method chosen for this depends on the choice of starting material, desired production speed, desired structure and shape of the end product, as well as other criteria.

One such previously known method for producing products from a wood fibrous pulp material is based on a technique that may be termed "fibre casting" and is based on a "wet" method.

In an established method this fibre casting is performed by drawing a stock or grist, a wood fibrous material or similar material dissolved in water, together with selected additives, such as adhesive, etc., through a forming tool, having a shape complementary to the outer shape of the product, the wood fibrous material adhering to the surface of the tool, while the pulp water passes through perforations in the forming tool.

It is here usual for the wood fibrous concentration to be as low as 0.5-1% which means that 200 to 100 times as much water must be handled.

Furthermore, in the known technology, forming tools must be made of a stainless material.

The forming tool must also be provided with uniformly distributed perforations in the form of small holes for the passage of pulp water. Experience has shown that, for satisfactory function, these holes must be tightly drilled and well distributed, with a diameter of around 1 to 2 mm.

Furthermore, the use of such forming tools requires the complementary surface facing the product to be clad or covered with a wire net or cloth and this, too, must be of a stainless material.

It is known that the drilling of all these small holes, as well as shaping and applying a wire net or cloth structure, require qualified, expensive manual labour.

Such a tool must withstand water, fibres, chemicals, vacuum and at least a certain amount of pressure.

The wire net or cloth must also be so strongly dimensioned that the product produced, in the form of a fibrous cake, can be released from the net or cloth.

The need for cleaning the wire net or cloth structure, etc., as well as the rest of the forming tool, is thus considerable.

After this type of moulding, a semi-manufacture must be transferred, or wet-pressed and transferred to a drier, or after-pressing and/or drying must be performed immediately between hot tool halves.

Such tool halves necessary for a subsequent treatment must also be made of a stainless material, be drilled with small holes and otherwise be shaped to give the product its final shape.

It is also known that as the semi-manufacture product dries its dimensions also reduce or shrink, which generally requires that the tool, used for a subsequent treatment is to be adapted or suited to the relevant dimensions.

The drying sequence used in this method is expensive and requires a considerable amount of energy.

The content of patent publication US-A-4 337 116 also belongs to prior art and shows a fibre-cast packaging product, consisting of wood fibre material and provided with a polyester layer.

The prior art may also be supplemented by the content of the patent publication number WO-A1-97/19803, showing and describing how a woven textile material can be compressed to a three-dimensional shape, with the aid of a thermoplastic with a hollow shape, where a layer of adhesive is used to hold the thermoplastic layer together with the textile material. Hence, WO-A1-97/19803 describes that the manufactured products have a framework or a support consisting of fibrous material and at least one surface part being covered by a layer creating a barrier, such as a foil or film resistant to gas or moisture, e. g. a plastic foil or film. The mould parts used, when fully united, have an inner cavity with a defining surface partially or entirely following the outer shape of the product. The method comprises essentially the steps of:
a) allowing an elongate foil or film, with a layer of a material as a portion resting on it, to be introduced between opened mould parts
b) uniting or moving the mould parts towards each other to enclose a foil or film portion and press a material structure string surrounding said foil or film portion against said foil or film and surround said foil or film portion along a defining line, corresponding to an edge-oriented defining line for the product,
c) causing a foil or film portion, with said material structure portion applied thereon and surrounded by the mould parts, to be displaced towards and into a cavity, formed within one of the mould parts, having a shape corresponding partially or completely to the outer shape of the product in order to, by means of a means influencing the foil or film portion, press said material structure portion against the inner surface of the mould part, and
d) the mould parts are thereafter conveyed or moved towards an open position for exposure of a non-deformable product or non-deformable products.

However, even though the above described prior art provide different methods for the manufacturing of a layered product comprising fibrous material and a barrier layer there is still a desire to improve the manufacturing process and avoid disadvantages such as excessive energy consumption and/or provide improved properties of the product such as impact absorbing ability, heat resistance and/or flexibility of the product as well as improved environmental care compared to prior art methods.

### Summary of the present invention

The departure point of the present invention is a method for producing one or several thin-walled products by means of a compression moulding or die casting procedure using at least two mould parts, arranged to move towards and away from each other, and where said mould parts, when fully united, have an inner cavity with an inner defining surface partially or entirely following the outer shape of the product as described in the preamble of claim 1.

In such a method, in order to solve one or several of the technical problems stated above, the present invention now advocates or suggests that an elongate foil with a layer of a fluffy material worked or processed to a fluffy material structure as a portion resting on it, is allowed to be introduced between opened mould parts. Hence, the products are thus manufactured from a dry fibrous material, which, as such, may be called a fluff pulp and the present invention is thus characterized in that said layer of a material is a layer of a loose fibrous material formed to a cellulose or the like fluffy material structure.

It is also proposed that the mould parts be united so that, in a first compression sequence, they enclose a foil portion carrying a fluffy material structure portion and press the fluffy material structure along a peripheral closed narrow surface towards the foil portion and against a lower mould part, the outer defining line of which may advantageously correspond to an edge-oriented defining line for the finished product.

It is also proposed that such a foil portion, with fluffy material structure portion applied thereon, surrounded by the mould parts, be caused to be displaced towards and into a cavity formed within an upper mould part having a shape corresponding partially or completely to the outer shape of the product in order, by means of a means influencing the foil portion, to press the foil portion with said fluffy material structure against the inner surface of the upper mould part.

It is also proposed that the mould parts shall thereafter be conveyed or moved towards an open position for exposure of a non-deformable product or non-deformable products.

Preferred embodiments, falling within the scope of the inventive concept, are that said means may consist of an elastic layer and/or said foil portion influenced by air or gas under a positive pressure.

Also proposed is that the air pressure applied shall be adjusted to regulate the degree of compression of the product in the fluffy material structure portion.

It is also proposed that the degree of compression and/or the degree of fixing of an added adhesive shall be adjusted so that the product is at least strong enough to be carefully transported intact to a subsequent machining station.

The fixing or curing degree of the adhesive may be increased in the subsequent machining station, in order to give the product its finished structure.

The surface, forming a cavity inside one or the upper mould part, is provided with a number of perforations for the passage of air, through which not only a volume of air enclosed in the cavity passes, but also a volume of air forming the fluffy material structure portion.

One mould part is designed and shaped to form a product from the fluffy material structure portion enclosed, said product having one or several compartments.

It is also advocated that said means for influencing the foil portion and the fluffy material structure portion resting on it, shall consist of an elastic layer and/or foil or film portion, influenced by air or a gas under a positive pressure.

A product manufactured according to the present method also falls within the scope of the invention consisting of: a fluffy material structure portion compressed in one or several steps and having one surface coated with a barrier protecting against moisture, air and/or taste, such as a gas and fluid-resistant foil or film, a fluffy structure portion compressed in one or more steps and having both surfaces coated with a foil, film or the like ; a fluffy structure portion compressed in one or more steps and having one or both surfaces coated with a gas and fluid-resistant foil or film, wherein certain foils or films used must be gas permeable.

Taking into consideration that the technical deliberations one skilled in the art must do in order to be able to offer a solution to one or more technical problems are initially a necessary insight into the measures and/or the sequence of measures to be taken and also a necessary choice of the means required, the following technical problems should be relevant in developing the subject of the present invention. Below follow a number of examples of different features and embodiments which may be used together with the present invention.

According to one aspect of the present invention, it is desirable to be able to produce a product, such as a packaging product, in which most of the materials are taken from materials that are easy to recycle, that are desirably compostable and that, to a great extent, can be manufactured from and contain recycled fibrous material.

According to one aspect of the present invention, it is desirable to be able to offer a "half-dry" or "dry" method, in accordance with the definition stated in the following, for compression moulding products, and which is based on the use of a dry or half-dry fibrous material that has been worked or prepared to a fluffy structure.

According to one aspect of the present invention, it is desirable to be able to perceive the measures and the sequence of measures associated with offering rational manufacture of products from a fluff pulp, worked or prepared to a fluffy structure and requiring a limited supply of energy.

According to one aspect of the present invention, it is desirable to perceive the significance of and advantages associated with moulding the products via the technique of compression moulding or compression of a fluffy structure, preferably a wood fibrous fluff, a cellulose fluff or the like and which, in such compressed form, can offer better impact-absorbing ability and higher immunity to heat than a plastic material and which, in such compressed form, proves to be more flexible than cardboard or corrugated cardboard.

According to one aspect of the present invention, it is desirable to be associated with a production method for products based on the use of fluffy structured material, with high dryness as starting material, and then adding small amounts of product-stabilising additives, such as binder or glue material.

According to one aspect of the present invention, it is desirable to use one or more types of adhesive as stabilising additive, preferably such additives that can be fixed and/or cured by supplying heat.

According to one aspect of the present invention, it is desirable to use a fluffy material that does not require more liquid or water than the quantity necessary in the binder material, e. g. glue or adhesive, required for such a material.

According to one aspect of the present invention, it is desirable to use a method which requires limited work and that manages to entirely eliminate the need for a wire structure and the special drilling procedures, required to deflect the pulp water in the moulding tool.

According to one aspect of the present invention, it is desirable to use a "half-dry" method, where the method do not require any proper product-drying energy but only the thermal energy required to stabilise the binder material or glue material utilised.

According to one aspect of the present invention, it is desirable to create such criteria that the product, following a compression moulding sequence, need only have sufficient stability to be moved to a following or succeeding treating station, for instance.

According to one aspect of the present invention, it is desirable to make use of a heating in at least one mould part in a compression moulding station or a compression moulding sequence.

According to one aspect of the present invention, it is desirable to allow a final fixing of the adhesive material or medium used to take place in a final shaping and/or post-pressing station for the product, thus requiring very little energy.

According to one aspect of the present invention, it is desirable to provide a method for a production of thin-walled products, enabling the use of such fibrous materials that are recyclable and in many applications even compostable, and in that a raw material used can be renewable and may consist, partially or entirely, of waste paper.

According to one aspect of the present invention, it is desirable to create a conveyor belt, consisting of a flat foil with a layer of a fluffy structure resting on it, and allowing a part thereof to be introduced between open mould parts, included in a compression moulding arrangement.

According to one aspect of the present invention, it is desirable to shape mould parts so that, in a first compression sequence, they can compress the fluffy structure along a peripheral oriented and closed, narrow surface, the outer defining line of which may correspond to an edge-oriented defining line for the end or finished product.

According to one aspect of the present invention, it is desirable to have a mould part in a first compression sequence to act against a flat lower mould part and surround an elastic foil portion with a layer, uniform in thickness, of a fluffy material structure portion applied thereon, and in a second compression sequence causing the elastic foil portion and the fluffy material structure portion resting on it to be displaced towards and into the upper mould part, having an inner shape corresponding partially or completely to the outer shape of the product, in order, by means of a means influencing the elastic foil portion, to be able to gradually press the foil portion with the fluffy material structure portion against the inner surface of the upper mould part.

According to one aspect of the present invention, it is desirable to produce thin-walled products by forming only an upper mould part with a cavity, the surface structure of which follows the outer shape of the product, and where the lower mould part can be made flat and given or supporting an elastic layer, which is elastic to expand inside the cavity during the compression moulding procedure.

According to one aspect of the present invention, it is desirable to prior to the actual compression moulding sequence, assigning a foil and/or an elastic layer a suitable high temperature so that it can withstand the extension necessary to be able to form the product.

According to one aspect of the present invention, it is desirable to have the foil-influencing means consisting of an elastic layer influenced by air or gas under a positive pressure in order, by means of the foil portion, to press the fluffy material structure part into the cavity of the upper mould part, thus forming the thin-walled product solely against the inner surface of the mould part.

According to one aspect of the present invention, it is desirable to determine the density of the product in the compression moulding sequence by a regulation of the air or gas pressure.

According to one aspect of the present invention, it is desirable to assign the upper mould part an excess temperature and/or assigning the lower mould an excess temperature and/or assigning the air or gas used an excess temperature and/or adjusting the duration of the pressing time so that the product formed is finally fixed or only partially fixed, in the latter case however to such an extent that the product can be moved intact to a subsequent treating station, preferably a post-compression station.

According to one aspect of the present invention, it is desirable to create conditions for a simple method of producing products, where the inner shape and cavity of only one mould part, the upper one, is designed to create a trough-shaped product with one or several compartments.

According to one aspect of the present invention, it is desirable to make use of a post compression station, in order to give the product its final shape, final surface structure and, if necessary, entirely or partially complete the fixing or curing process by supplying heat.

The advantages that may be deemed primarily characteristic of a method in accordance with the present invention for the production of one or several products are that conditions have been created for a simple and cheaper way of series-producing products, which, by means of a dry or half-dry compression moulding procedure, are able to acquire a stable shape and where the starting material may consist of a fluff pulp or the like, which is worked and prepared to a fluffy material structure and where portions of this fluffy material structure, resting on a supporting elastic foil, film or a layer shall be compressed against an inner cavity, shaped in one of the mould parts.

Thin-walled products can be manufactured merely by shaping an upper mould part with a cavity, the surface structure of which follows the outer shape of the product, and where a lower mould part may be made flat and be provided with an elastic layer, which shall expand in the cavity during the compression moulding process.

The most characteristic features of a method, in accordance with the present invention, are defined in the characterizing part of the appended claim 1.

### Brief description of the drawings

A currently proposed method, applicable in a mechanically co-ordinated production line, for the production of one or several products, such as packaging products, and also an example of a packaging product and a lid to fit the packaging product, will be described in more detail with reference to the accompanying drawings in which;
- **Figure 1**: illustrates, in a view from the side, the principle of a production line for several products, utilising a finite strip of foil as carrier for a fluffy material structure,
- **Figure 2**: shows, in a somewhat enlarged scale, the two mould parts in a compression moulding station, utilised in a half-dry compression moulding method in accordance with the invention, and with the two mould parts assuming a slightly open position, enabling them to receive a portion of the elongate strip of foil with a portion of the fluffy material structure layer resting thereon,
- **Figure 3**: shows the upper mould part assuming a position, prior to compression of the fluffy material structure, for sealing against a foil or film portion beneath and the lower mould part, an outer refining line being selected to follow an edge-oriented defining line of the finished product,
- **Figure 4**: shows the mould parts, assuming the position indicated in Fig. 3, and illustrating the supply of an amount of air, placed under a positive pressure, for an initial moulding of the product,
- **Figure 5**: shows a position in which the air pressure applied as been allowed to act to convey the fluffy material structure portion towards the defining surfaces of the cavity of the upper mould part and where the fluffy material structure portion is in a compressed state,
- **Figure 6**: shows an initial process step for evacuation of the pressure applied, where an elastic layer is permitted to shrink or be compressed back to a starting position,
- **Figure 7**: shows the mould parts in a fully open position so that a finished product or products, or a product or products serving as semi manufacture (s), can be removed from the compression moulding station,
- **Figure 8**: illustrates, in a view seen from the side, an arrangement enabling subsequent treatment in the form of subsequent compression and/or embossing in a two-part tool,

- **Figure 9**: shows in perspective a product, turned with the correct way up, with a lid fitting the product, and
- **Figure 10**: shows in perspective a product, produced in accordance with figs. 1 to 8

### Description of a currently preferred embodiment

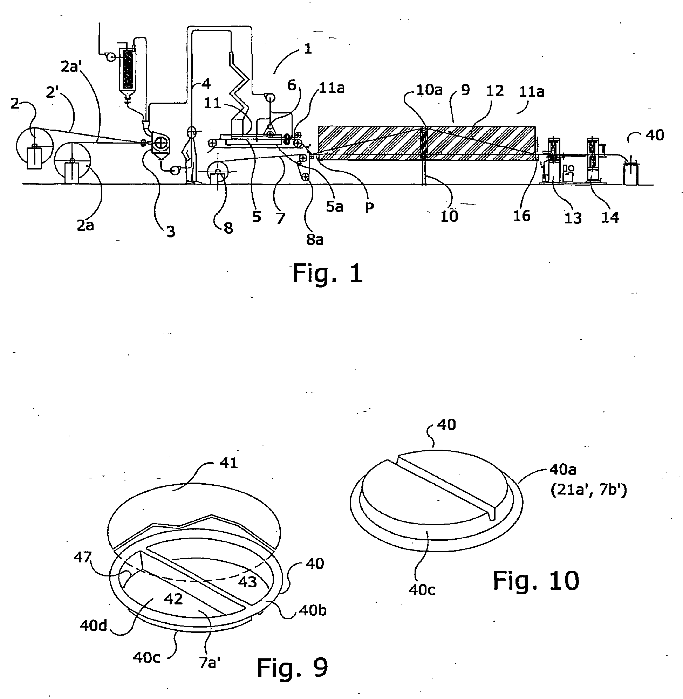

Figure 1 shows a production line 1 for the production of one or several products, such as packaging products 40, with the aid of a finite carrier in the form of an elongate elastic foil or film. Figure 1 also shows that a fibrous material used for producing a product 40, in accordance with the present invention, is present in the form two rolls 2,2a.

These rolls 2,2a consist of rolled "fluff pulp", a relatively dry pulp containing cellulose fibre, of known type.

By "dry" pulp is generally meant a pulp material containing fibrous material with a moisture percentage of around 6 to 8 %.

One or several pulp webs 2', 2a' run from these rolls 2,2a to be torn across and disintegrated in a mill arrangement 3 or a fluffy material former, without the fibres being destroyed to any great extent.

The fine, loose fibrous material, thus formed, is transported with added air via a pipe 4 to be uniformly distributed over a surface, in the form of a fluffy material 11.

This state, wherein the fibrous material contains air, is termed "fluffy structure" 11 in the following description.

The fluff structure 11 is transported in known manner through the pipe 4 and is distributed via means known per se. The fluff structure is applied as a layer 11 a along a table 5.

The table 5 may consist of an endless wire or net belt 5a, that carries the fluff structure 11 in the direction to the right in fig. 1.

The fluff structure 11 is spread on the table 5 or, in the present embodiment on a belt 5a, as a layer 11a with a predetermined thickness.

The thickness of the layer 11 a is chosen depending, inter alia, on the feed rate of the fluff structure via the pipe 4, the width of the table 5 and the feed rate of the endless belt 5a, which factors are in turn dependent on the thickness of the finished product, the degree of compression of the fluff structure in a compression moulding tool included in a compression moulding station, the choice of adhesive or glue, etc.

A doctor 6, in the form of brushes rotating counter to the direction of transport, is designed to distribute and level the fluff structure 11 so that the layer 11 a formed has a relatively level upper surface.

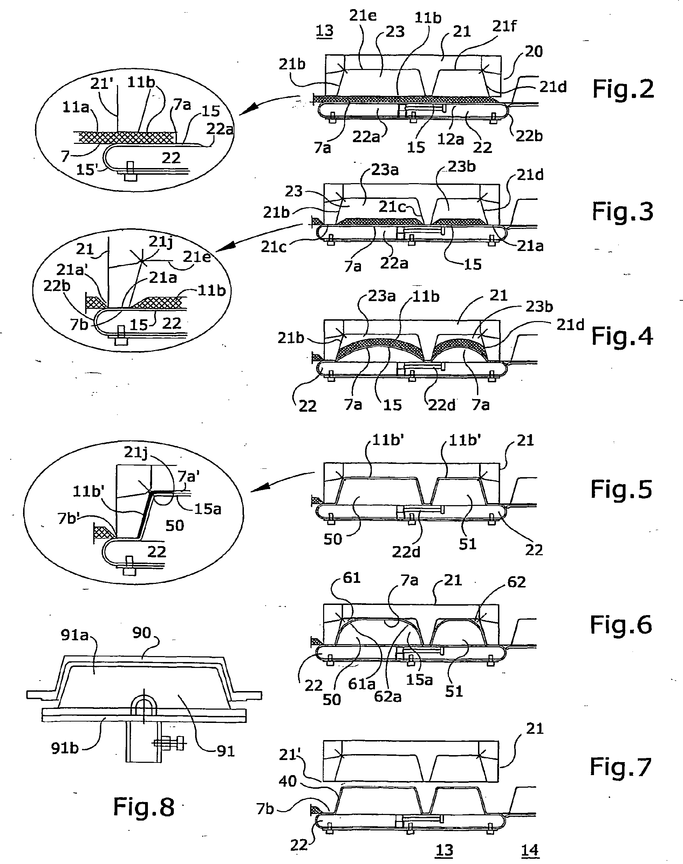

The compression moulding process in a compression station 13 will be described in more detail in the following, with reference to figs. 2 to 7.

The embodiment illustrated in fig. 1 thus relates to a production line for a plurality of packaging products 40 and is based on the principle of utilising a finite web 12.

This finite web 12 consists of a material-supporting foil or filmstrip 7, on which a layer 11a of a fluff structure of suitable thickness rests.

Figure 1 shows the foil strip 7 rolled up on a roll 8, the strip 7 being fed via a roller arrangement 8a towards a position "P", where the foil strip 7 is provided with said layer 11a.

The foil strip 7 with a layer 11a of fluff structure resting thereon is fed by means of tractive or pulling forces occurring close to the forming or tool or compression moulding station 13.

Feeding of the strip 7 at the station 13 is discontinuous, whereas feeding of the layer 11 a on the foil strip 7 at the position "P" is continuous. A means 10 is thus required which, via a raising and lowering movement at position 9, can alter the length of the strip between position "P" and said station 13.

Figure 1 also shows that, close to and downstream of the compression moulding station 13 is a treating station 14 for final treating of a semi-manufacture or product, in order to produce said final product 40.

Referring now to fig. 2, this shows a side view of the initial position between two mould parts 21, 22, an upper mould part 21 and a lower mould part 22 included in the compression moulding station 13.

In accordance with the invention, thus, a portion of an elongate foil 7 with a layer 11 a of a fluff structure 11 resting thereon, shall be introduced between slightly open mould parts 21,22, as shown in fig. 2.

The mould parts 21, 22 shall thereafter be united or moved together and compressed, as shown in fig. 3, along a narrow, peripheral section 7b, formed by the narrow outer section 21 a of the upper mould part 21, these sections 7b, 21a defining an outer, closed defining line 7b', 21a' corresponding to an edge-oriented defining line 40a (see fig. 10) of the product 40.

Figure 3 shows that the upper.mould part 21 is pressed against the lower, flat mould part 22, the upper surface 22a of which could be covered by an elastic layer 15.

A strip portion 7a, with a portion 11 b of the fluff structure 11 applied thereon, encompassed by the outer section 21a of the mould part 21, is displaced, according to fig. 4, towards the mould part 21 with a cavity 23 having a shape corresponding partially or entirely to the exterior of the product 40, by a means influencing the strip-pertaining portion 7a to press the defining portion of fluff structure 11 b against the surfaces defining the inner cavity of the mould part 21, some of which have been designated 21 b, 21 c, 21 d, 21 e and 21f.

Said mould parts 21,22, when in a fully united and closes position as shown in fig. 3, thus have an inner cavity 23 divided into two sub-cavities 23a, 23b to enable manufacture of a product according to fig. 9 and/or fig. 10.

In fig. 4 a foil portion 7a, with fluff structure portion 11b applied thereon, encompassed by the mould part 21 is caused to be displaced upwards towards the inner surfaces of the cavities 23a, 23b, where the cavities 23a, 23b of the mould part 21 are shaped to correspond partially or entirely to the exterior of the product, by a means influencing the foil portion 7a and the layer 15, to press individual fluff structure portions 11 b and individual foil portions 7a against the inner surfaces of the mould part.

Figure 5 is intended to illustrate that a taut or expanded elastic layer 15a has pressed and stretched the foil portion 7a' and the fluff structure portion 11 b' against all defining surfaces of the cavity 23 (23a) within the upper or first mould part 21 and is caused to be partially or entirely fixed or solidified in this position.

The fluff structure portion 11 b is here in the form of a compressed fluff structure 11 b', with the foil portion 7a' stretched so that, via the fluff structure, it is able to cover all the defining surfaces of the cavity in the cavity portion 23a of the mould part 21.

Figure 5 illustrates the use of the taut and expanded elastic layer 15a, placed below the similarly taut foil portion 7a', and where this layer 15a has, by means of air supplied via the channel 22d into the compartments 50,51, pressed the foil portion 7 a' to the position shown in fig. 5.

Figure 6 shows that the air pressure used in the compartments 50,51 can now be removed and that the layer 15a is enabled, by its own resilience, to resume a flat position with the aid of an equalising negative pressure, i.e. supply of an equalising air pressure between the layer 15a and the foil portion 7a'.

No measures are required if the foil 7a and the compressed fluff structure 11 b are chosen so that the requisite amount of air can pass through the structure 11 b, and the structure 11 b will return by its own resilience to a flatter position.

Here a piston-cylinder arrangement (not shown) is proposed that, in compressed position, generates sufficient pressure to compress the fluff structure and, in expanded position, permits the elastic layer to resume its flat position.

If the foil 7a, 7a' is airtight, sufficient air must be supplied to the compartments 61, 62 via hoses 61 a, 62a directly connected to atmospheric pressure, a piston-cylinder arrangement or a positive pressure.

The mould parts 21, 22 are thereafter moved to a fully open position in which the product 40 or products is/are exposed, as shown in fig. 7.

Said means may consist of an elastic strip portion 7a influenced by air or a gas under positive pressure.

As shown in the present embodiment said means may consist of an elastic layer 15 covering the upper surface 22a of the mould part 22 where air or gas, preferably heated to a positive pressure, influences the layer 15 to lift the elastic foil portion 7a with the structure portion 11b towards the inner surfaces 21 b, 21 c, 21d, 21e and 21f towards the interior of the cavity.

Evacuation of the air or gas may, as in the embodiment shown, be achieved via channels or holes 21j, arranged between the compressed fluff structure 11 band the surfaces 21 b, 21 e forming the cavity of the mould part 21.

The surface 21e and the defining surfaces forming a cavity shall be provided with a number of holes 21j, through which not only the volume of air enclosed in the cavity passes, but also a large proportion of the volume of air forming the fluff structure 11 b.

One mould part 21 is designed with sub-cavities 23a, 23b in order to form a packaging product 40 with several compartments 42, 43 (see fig. 9).

In its central region 9 the web 12 has a device 10 for raising and lowering the foil strip 7 in order to adjust the length of the carrier strip to the intermittent drive occurring in the station 13 and an after-compression and/or embossing station 14.

An alternative to compensate the discontinuous production is to regulate the height of the transport web 12 so that raising occurs slowly whereas lowering occurs considerably faster.

The lower mould part 22 has a flat upper surface 22a, which may be covered by an elastic layer 15, which in turn may be fixed to the edge area 22b of the mould part 22. This layer is not necessary if the foil is airtight and sufficiently elastic.

The products 40,41 will comprise a frame 40c (see fig. 10) of a wood fibrous material, one surface part 40d being covered by a layer serving as barrier against taste, odour, gas and moisture, illustrated here for reasons of simplicity as a moisture resistant foil portion 7a', such as a plastic foil.

Figure 7 shows that the mould parts 21, 22 have assumed such a position that the finished product 40 can be fed further to an after-pressing function and/or a cutting station 14 for the packaging product.

It is also clear that a lid 41 for the product can very well be produced in the same way as described for the product 40, where the lid 41 shall cooperate with edge-oriented defining surfaces.

Various product shapes naturally fall within the scope of the invention and it also covers such products manufactured in accordance with the method. This also applies to the lid fitting the product.

The starting material 2 for the embodiment in accordance with fig. 1 is a dry pulp structure of suitable quality and shape. The pulp web 2', 2a' is fed into pulp shredder / fluffer 3. The shredded fibre may possibly need to pass through a simple defibrator (not shown), where fibres are further exposed.

The fibre portion, here converted to a fluff structure, is transported by a fan, via an air duct 4, to a fibre mat-layer, for forming the previously mentioned layer 11a.

This may be an apparatus of type Pendistor TM. Fluffed fibrous material is distributed over a wire or a net in a layer or mat 11a. Transport air is drawn through the fibre layer (in the following called a mat) and the wire, and is returned via a filter of suitable type.

The thickness of the mat or layer 11a is determined primarily by the speed of the feeding rollers to the shredder and by the speed of the wire.

A doctor or layer-limiter 6 is located above the wire. This shaves off any unevenness in the mat or layer 11a and returns excess fibres to the mill 3.

Before leaving the wire the mat 11 a may be pressed in controlled manner under a roller located above the turning/driving roller of the wire. The edges of the mat may possibly be trimmed by circular knives in order to obtain straight edges.

The edge strips are conveyed back to the mill 3.

According to figs 1, at the point designated "P", the mat 11a encounters a foil 7, selected with regard to heat resistance, extensibility or other desired properties.

An adhesive as glue is added and distributed by means of one or more nozzles.

Here it is suggested that a water-based glue can be distributed, sprayed, over the uppermost surface of the mat 11a and/or, but should be distributed primarily over the upper surface of the foil 7.

Up to this point the process is continuous.

Hereafter feeding of the foil 7, the mat 11 a (in the following termed web 12) occurs intermittently. In this example it will be fed stepwise.

This is achieved by a conducting roller 10a, with linear motors, lifting the web (7,11a) continuously and taking up the length by a change of angle.

A suction box 16 holds down the mat 11a in front of the moulding station 13 during the lift.

A pair of air cylinders or linear motors, with clamping function located after the compression moulding station 13 on each side of the web, clamp fast the edges of the already formed product and pull the web along while, at the same time, the conducting roller 10a is lowered and releases the web.

A heating device, such as an IR heater, is placed above (or below) the web 12 before the station 13. The purpose of this is to a certain extent vaporise the water in the glue, in controlled manner, to the correct dry solids content, but especially to pre-heat the foil 7 to softening temperature and simultaneously pre heat the fibre mat or strip 11 a.

The station 13 consists of an upper forming tool 21 of steel or aluminium, with an internally polished surface, the surface also being treated with a suitable plastic material. A plastic material sold under the trademark "Teflon" is suggested here.

The mould part 21 is provided with electric heating, controllable between 60 and 300 C.

The vertical movement and activated pressure of the mould part 12 are controlled by one or more hydraulic piston-cylinder arrangements, not shown.

The lower part 22 of the two mould parts consists mainly of a flat steel plate 22. The foil 7 runs across the steel plate 22. The foil 7 shall have high extensibility and sufficient resistance to heat.

According to fig. 5 the glue should be able to be fixed, e. g. cured, in this position under pressure and heating for, say, 3-10 seconds.

Air enclosed and water vapour remaining from the glue are evacuated through small holes 21j in the mould part 21.

An ejector allows the product 40 to be held down when the mould part 21 is raised after moulding. This arrangement ensures separation of the product 40 from the mould part 21. The sequence is repeated with the forward feeding as above.

The product now consists of a strip of coherent 3-dimensionally shaped products 40. The next step in the process occurs in a subsequent working station 14, see fig. 8, situated one or two product lengths later.

An upper female tool 90 here meets a male tool 91 to effect a final pressing.

The tool 91 should have a clearance to the sides of the product 40.

The steel tool 90 or 91 in this working station may be provided with an embossing die for a logo, pattern, manufacturer's identity, etc. Stamping knives to punch clean the longitudinal sides of the product 40 are located on the assembly plate 91 b of the male tool. This sequence occurs simultaneously with the moulding cycle before it.

In a final station the coherent strip is cut transversely across the strip. This sequence occurs during the moulding cycle before it.

The product can then fall down onto a conveyor belt for further refining or stacking ready for use as packaging.

The advantages of the dry or half dry method in accordance with the invention over the" wet" fibre casting method are thus obvious.
• Low tool costs through the use of few and simple mould parts or tools.
• The product is manufactured having a liquid barrier laminated to a fibre layer in one and the same sequence, which is not possible with the wet method.
• All operations take place during the same sequence. No waste of time.
• High surface finish on both sides of the product, no marks from the wire or net structure.
• The amount of fibre used can be minimised by gluing the fibre layer instead of a poorer hydrogen binding.
• Allows the manufacture of a rigid, thin-walled product.
• No exhaust to recipients which requires permission from an environment protection board.
• Low investment. Low maintenance costs. Simple technology.
• Low energy requirement since an already dried fibre material is used
• as starting material.
• High production capacity. Few, quick work stages. No time overlap.
• Little space required since no tanks, dissolvers, pipelines, pumps, floor ducts, etc. are required.
• The product can be used for modified atmosphere, i.e. gastight packages.
• The product can be heated in an oven to 200 C and of course in a microwave oven.
• The product can be frozen.

### Alternative products in similar systems

Adhesive can be added directly in the blow line for products where a pulp structure with high "freeness" is acceptable.

Applications using thermoplastic as binder will be able to utilise preheating and cold forming tools.

The term "dry" method shall be taken to mean that the fluff structure is mixed or coated with a dry binder.

The term "half dry" method shall be taken to mean that the fluff structure is mixed with, or rests against, a layer of adhesive in the form of small quantities of liquid-based binder.

The invention is naturally not limited to the embodiment described above by way of example, but may undergo modifications within the scope of the inventive concept as illustrated in the appended claims.

## Claims

1. A method for producing one or several products, by means of a compression moulding or die-casting procedure using at least two mould parts arranged to move towards and away from each other, having a framework or a support consisting of fibrous material, at least one surface part being covered by a layer creating a barrier, such as a foil or film resistant to gas or moisture, e. g. a plastic foil or film, and said mould parts, when fully united, having an inner cavity with a defining surface partially or entirely following the outer shape of the product, said method comprising
a) an elongate foil or film with a layer of a material as a portion resting on it is allowed to be introduced between opened mould parts,
b) the mould parts are united or moved towards each other to enclose a foil or film portion and press a material structure string surrounding said foil or film portion against said foil or film and surround said foil or film portion along a defining line, corresponding to an edge-oriented defining line for the product,
c) a foil or film portion, with said material structure portion applied thereon, surrounded by the mould parts, is caused to be displaced towards and into a cavity, formed within one of the mould parts, having a shape corresponding partially or completely to the outer shape of the product in order, by means of a means influencing the foil or film portion, to pressing said material structure portion against the inner surface of the mould part, and
d) the mould parts are thereafter conveyed or moved towards an open position for exposure of a non-deformable product or non-deformable products.
**characterized in that**
said layer of a material is a layer of a loose fibrous material formed to a cellulose or the like fluffy material structure,

2. A method as claimed in claim 1, **characterized in that** said means in accordance with step "c" consists of an elastic foil or film portion, influenced by air or gas under a positive pressure.

3. A method as claimed in claim 1 or claim 2, **characterized in that** the air pressure applied is adjusted to regulate the degree of compression in the fluffy material structure portion.

4. A method as claimed in claim 1,2 or 3, **characterized in that** the degree of compression and/or the degree of fixing of an added adhesive is/are adjusted so that the non-deformable product is strong enough to be transported to a subsequent machining station.

5. A method as claimed in claim 4, **characterized in that** the fixing degree or curing of the adhesive or glue is increased in the subsequent machining station in order to give the product its finished structure.

6. A method as claimed in claim 1 or 2, **characterized in that** said means, in accordance with step "c" consists of an elastic layer influenced by air or gas under a positive pressure, acting against said foil or film portion.

7. A method as claimed in claim 1 or claim 6, **characterized in that** the air or gas can be supplied between the foil or film portion and the elastic layer.

8. A method as claimed in claim 1, **characterized in that** a supply of air or gas takes place, under step "d", between a compressed fluffy material structure portion and a surface of the mould part forming a cavity.

9. A method as claimed in claim 1 or claim 8, **characterized in that** the surface forming the cavity is provided with a number of perforations or holes for the passage of air, through which not only a volume of air enclosed in the cavity passes but also a volume of air forming the fluffy material structure portion.

10. A method as claimed in claim 1, **characterized in that** one mould part is designed to form a product with one or several compartments.

## Patentansprüche

1. Verfahren zum Herstellen eines oder mehrerer Produkte durch ein Press- oder Druckgieß-Arbeitsverfahren unter Verwendung von zumindest zwei Formteilen, die angeordnet sind, um sich aufeinander zu und voneinander weg zu bewegen, die eine Grundstruktur oder eine Abstützung, die aus einem Fasermaterial besteht, aufweisen, wobei zumindest ein Oberflächenteil von einer Schicht bedeckt ist, die eine Barriere erstellt, wie z.B. eine Folie oder ein Film, der gas- oder flüssigkeitsbeständig ist, z.B. eine Plastikfolie oder -film, und wobei die Pressteile, wenn sie vollständig vereinigt sind, einen inneren Hohlraum mit einer definierenden Oberfläche aufweisen, die teilweise oder vollständig der äußeren Gestalt des Produkts folgt, wobei das Verfahren umfasst:
a) für eine längliche Folie oder Film mit einer Schicht eines Materials als ein Teil, der auf ihr ruht, wird zugelassen, dass sie zwischen geöffnete Pressteile eingeführt wird,
b) die Pressteile werden vereinigt oder aufeinander zu bewegt, um einen Folien- oder Filmteil zu umschließen und einen Materialstrukturstrang, der den Folien- oder Filmteil umgibt, gegen die Folie oder Film zu pressen und umgeben den Folien- oder Filmteil entlang einer definierenden Linie, die einer randorientierten definierenden Linie für das Produkt entspricht,
c) ein Folien- oder Filmteil mit dem darauf aufgetragenen Materialstrukturteil, der durch die Pressteile umgeben ist, wird dazu gebracht, in Richtung und in einen Hohlraum versetzt zu werden, der innerhalb eines der Pressteile gebildet wird, die eine Gestalt aufweisen, die teilweise oder vollständig der äußeren Gestalt des Produkts entspricht, um durch ein Mittel, das den Folien- oder Filmteil beeinflusst, den Materialstrukturteil gegen die innere Oberfläche des Pressteils zu pressen, und
d) die Pressteile werden danach transportiert oder in Richtung einer offenen Position zum Aussetzen eines nichtdeformierbaren Produkts oder nichtdeformierbarer Produkte bewegt,
**dadurch gekennzeichnet, dass**
die Schicht eines Materials eine Schicht eines losen Fasermaterials ist, das zu einer Zellulose oder einer ähnlichen flauschigen Materialstruktur geformt ist.

2. Verfahren nach Anspruch 1, **dadurch gekennzeichnet, dass** das Mittel gemäß Schritt "c" aus einem elastischen Folien-oder Filmteil besteht, der durch Luft oder Gas unter einem positiven Druck beeinflusst ist.

3. Verfahren nach Anspruch 1 oder Anspruch 2, **dadurch gekennzeichnet, dass** der Luftdruck, der angelegt ist, eingestellt wird, um der Grad an Kompression in dem flauschigen Materialstrukturteil zu regulieren.

4. Verfahren nach Anspruch 1, 2 oder 3, **dadurch gekennzeichnet, dass** der Grad an Kompression und/oder der Grad an Befestigung eines zugefügten Klebstoffs eingestellt ist/sind, so dass das nichtdeformierbare Produkt stark genug ist, um zu einer nachfolgenden Bearbeitungsstation transportiert zu werden.

5. Verfahren nach Anspruch 4, **dadurch gekennzeichnet, dass** der Befestigungsgrad oder ein Aushärten des Klebstoffs oder Leims in der nachfolgenden Bearbeitungsstation erhöht wird, um dem Produkt seine endgültige Struktur zu geben.

6. Verfahren nach Anspruch 1 oder 2, **dadurch gekennzeichnet, dass** das Mittel gemäß Schritt "c" aus einer elastischen Schicht besteht, die durch Luft oder Gas unter einem positiven Druck beeinflusst ist, der gegen den Folien-oder Filmteil wirkt.

7. Verfahren nach Anspruch 1 oder Anspruch 6, **dadurch gekennzeichnet, dass** die Luft oder das Gas zwischen den Folien- oder Filmteil und die elastische Schicht geführt werden kann.

8. Verfahren nach Anspruch 1, **dadurch gekennzeichnet, dass** eine Zuführung von Luft oder Gas unter Schritt "d" zwischen einem komprimierten flauschigen Materialstrukturteil und einer Oberfläche des Pressteils, der einen Hohlraum bildet, stattfindet.

9. Verfahren nach Anspruch 1 oder Anspruch 8, **dadurch gekennzeichnet, dass** die Oberfläche, die den Hohlraum bildet, mit einer Anzahl von Perforationen oder Öffnungen für den Durchgang von Luft versehen ist, durch die nicht nur ein Volumen von Luft, das in dem Hohlraum eingeschlossen ist, sondern auch ein Volumen von Luft, das den flauschigen Materialstrukturteil bildet, gelangt.

10. Verfahren nach Anspruch 1, **dadurch gekennzeichnet, dass** ein Pressteil gestaltet ist, um ein Produkt mit einem oder mehreren Kammern zu bilden.

## Revendications

1. Procédé permettant de produire un ou plusieurs produits, par le biais d'une procédure de moulage par compression ou de moulage sous pression impliquant au moins deux pièces de moule disposées pour se rapprocher et pour s'éloigner, comportant un cadre ou un support constitué d'un matériau fibreux, au moins une pièce de surface qui est recouverte d'une couche créant une barrière, telle qu'une feuille ou un film étanche aux gaz ou à l'humidité, par exemple une feuille ou un film de matière plastique, et lesdites pièces de moule, quand elles sont entièrement unies, comportant une cavité interne dotée d'une surface de définition suivant partiellement ou entièrement la forme extérieure du produit, ledit procédé comprenant les étapes suivantes :
a) on introduit une feuille ou un film étiré doté d'une couche de matériau sous forme de partie reposant sur lui entre les parties ouvertes du moule,
b) on unit les pièces du moule ou on les rapproche afin d'envelopper une partie formant une feuille ou un film, et de comprimer une corde formant une structure matérielle entourant ladite partie formant une feuille ou un film contre ladite feuille ou ledit film, et d'entourer ladite partie formant une feuille ou un film le long d'une ligne définissante, correspondant à une ligne définissante orientée suivant une arête pour le produit,
c) on déplace une partie formant une feuille ou un film comportant ladite partie formant une structure matérielle appliquée sur lui, entourée par les pièces de moule, vers une cavité formée dans l'une des pièces de moule et dans celle-ci, dont la forme correspond partiellement ou complètement à la forme extérieure du produit, afin de comprimer ladite partie formant une structure matérielle contre la surface intérieure de la pièce de moule à l'aide d'un moyen influençant la partie formant une feuille ou un film, et
d) les pièces de moule sont ensuite transportées ou déplacées vers une position ouverte en vue d'une exposition d'un produit non déformable ou de produits non déformables ;
**caractérisé en ce que** ladite couche de matériau est une couche de matériau fibreux et lâche dont la forme est celle d'une structure matérielle duveteuse cellulosique ou de type cellulosique.

2. Procédé selon la revendication 1, **caractérisé en ce que** ledit moyen conforme à l'étape c) est constitué d'une partie élastique formant une feuille ou un film, influencé par de l'air ou par un autre gaz exerçant une pression.

3. Procédé selon la revendication 1 ou selon la revendication 2, **caractérisé en ce que** la pression d'air est ajustée en vue de réguler le degré de compression dans la partie formant la structure matérielle duveteuse.

4. Procédé selon la revendication 1, 2 ou 3, **caractérisé en ce que** le degré de compression et/ou le degré de fixation d'un adhésif ajouté et/sont ajusté(s) de manière à ce que le produit non déformable soit suffisamment résistant pour être transporté jusqu'à une station suivante d'usinage.

5. Procédé selon la revendication 4, **caractérisé en ce que** le degré de fixation ou le durcissement de l'adhésif ou de la colle augmente à la station suivante d'usinage, afin de donner au produit sa structure finale.

6. Procédé selon la revendication 1 ou 2, **caractérisé en ce que** ledit moyen conforme à l'étape c) est constitué d'une couche élastique influencée par de l'air ou par du gaz exerçant une pression, qui agit contre ladite partie formant une feuille ou un film.

7. Procédé selon la revendication 1 ou selon la revendication 6, **caractérisé en ce que** l'air ou le gaz peut être introduit entre la partie formant une feuille ou un film et la couche élastique.

8. Procédé selon la revendication 1, **caractérisé en ce qu'**une introduction d'air ou de gaz a lieu à l'étape d) entre une partie formant une structure matérielle duveteuse comprimée et une surface de la partie de moule formant une cavité.

9. Procédé selon la revendication 1 ou selon la revendication 8, **caractérisé en ce que** la surface formant la cavité est dotée d'un certain nombre de perforations ou de trous permettant le passage d'air, à travers lesquels passe non seulement un certain volume d'air enfermé dans la cavité, mais aussi un certain volume d'air intégré à la partie formant la structure matérielle duveteuse.

10. Procédé selon la revendication 1, **caractérisé en ce qu'**une partie de moule est conçue pour former un produit comportant un ou plusieurs compartiments.
